# EUROPÄISCHE PATENTANMELDUNG

(11) **EP 1 372 101 A2**
(43) Veröffentlichungstag der Anmeldung: **17.12.2003**
(21) Anmeldenummer: 03090122.7
(22) Anmeldetag: 24.04.2003
(51) Int. Cl.: G06F 17/60

(54) **Verfahren und Anordnung zum Ermitteln von Gesamtpreisdaten bei einem mobilfunkgestützten Bestellvorgang**

(30) Priorität: 13.06.2002 DE 10227395
(71) Anmelder: SIEMENS AKTIENGESELLSCHAFT, 80333 München (DE)
(72) Erfinder: Gerber, Heiko, 10315 Berlin (DE); Hagen, Robert, 13629 Berlin (DE); Hoerner, Lorene, 13187 Berlin (DE); Kissner, Martin, 16766 Kremmen (DE); Krause, Klaus, 14163 Berlin (DE)

(57) **Zusammenfassung**

Die Erfindung betrifft ein Verfahren und ein Preisbildungssystem zum Ermitteln von Gesamtpreisdaten bei einem mobilfunkgestützten Bestellvorgang. Dabei wird nach einer unter Benutzung eines Mobilfunknetzes durchgeführten Übertragung von Bestellungsdaten von einem Bestell-Kommunikationsendgerät zu einem Anbieter- Kommunikationsendgerät eines Leistungsanbieters
ein Preisbildungssystem von dem Anbieter-Kommunikationsendgerät mit den Bestellungsdaten zugeordneten Bestelldaten beaufschlagt. Von dem Preisbildungssystem werden unter Nutzung von durch das Mobilfunknetz übermittelten und in Zusammenhang mit dem Bestellvorgang aufgetretenen Netzbenutzungsdaten aus einer in einem Einflussspeicher abgespeicherten Menge von Preisbeeinflussungsdaten die dem Bestellvorgang zugehörigen Preisbeeinflussungsdaten ausgewählt, und anhand der Bestelldaten und der ausgelesenen Preisbeeinflussungsdaten die den Bestellvorgang betreffenden Gesamtpreisdaten ermittelt.

## Beschreibung

In Zukunft werden die Möglichkeiten der mobilfunkgestützten Kommunikation immer häufiger verwendet werden zum Durchführen von Bestellvorgängen, bei denen von einem Bestell-Kommunikationsendgerät eines Kunden ausgehend über ein Mobilfunknetz Bestellungsdaten an ein Anbieter-Kommunikationsendgerät eines Leistungsanbieters übertragen werden, wobei die Bestellungsdaten eine Bestellung von z. B. Waren oder Dienstleistungen betreffen.

Der Erfindung liegt die Aufgabe zugrunde, ein Verfahren und eine Anordnung anzugeben, mit denen auf eine einfache und zuverlässige Art und Weise derartigen Bestellvorgängen zugehörige Preisdaten ermittelt werden können.

Diese Aufgabe wird erfindungsgemäß gelöst durch ein Verfahren zum Ermitteln von Gesamtpreisdaten bei einem mobilfunkgestützten Bestellvorgang, bei dem nach einer unter Benutzung eines Mobilfunknetzes durchgeführten Übertragung von Bestellungsdaten von einem Bestell-Kommunikationsendgerät zu einem Anbieter-Kommunikationsendgerät eines Leistungsanbieters ein Preisbildungssystem von dem Anbieter-Kommunikationsendgerät mit den Bestellungsdaten zugeordneten Bestelldaten beaufschlagt wird, von dem Preisbildungssystem unter Nutzung von durch das Mobilfunknetz übermittelten und in Zusammenhang mit dem Bestellvorgang aufgetretenen Netzbenutzungsdaten aus einer in einem Einflussspeicher abgespeicherten Menge von Preisbeeinflussungsdaten die dem Bestellvorgang zugehörigen Preisbeeinflussungsdaten ausgewählt werden, und anhand der Bestelldaten und der ausgelesenen Preisbeeinflussungsdaten die den Bestellvorgang betreffenden Gesamtpreisdaten ermittelt werden. Bei diesem Verfahren ist besonders vorteilhaft, dass die beim Bestellvorgang auftretende Benutzung des Mobilfunknetzes bei der Ermittlung der Gesamtpreisdaten berücksichtigt wird, indem im Zusammenhang mit dem Bestellvorgang auftretende Netzbenutzungsdaten (z. B. Zeitpunkt und Dauer einer durchgeführten Mobilfunkverbindung oder bei der Bestellung über das Mobilfunknetz übertragenes Datenvolumen) herangezogen werden. Vorteilhafterweise werden diese Netzbenutzungsdaten dazu verwendet, um aus einer in einem Einflussspeicher abgespeicherten Menge von Preisbeeinflussungsdaten (welche beispielsweise Tabellendaten einer Rabattstaffel darstellen können), die zu dem jeweiligen Bestellvorgang zugehörigen Preisbeeinflussungsdaten auszuwählen; diese Preisbeeinflussungsdaten werden bei der Ermittlung der Gesamtpreisdaten berücksichtigt.

Das erfindungsgemäße Verfahren kann so ablaufen, dass die Ermittlung der Gesamtpreisdaten unmittelbar nach Eintreffen der Bestelldaten bei dem Preisbildungssystem durchgeführt wird. Hierbei ist vorteilhaft, dass die Gesamtpreisdaten schon im Laufe des Bestellvorganges so frühzeitig (nahezu oder tatsächlich in Echtzeit) ermittelt werden, dass diese noch während des Bestellvorganges "online" an beispielsweise das Anbieter-Kommunikationsendgerät oder an das Bestell-Kommunikationsendgerät übertragen werden können.

Bei dem erfindungsgemäßen Verfahren können bei dem Preisbildungssystem eintreffende Bestelldaten und Netzbenutzungsdaten in einem Datenspeicher des Preisbildungssystems abgespeichert werden. Dadurch werden vorteilhafterweise aktuell eintreffende Bestelldaten und Netzbenutzungsdaten für eine spätere weitere Verwendung gespeichert und archiviert.

Das erfindungsgemäße Verfahren kann auch so ablaufen, dass in dem Datenspeicher des Preisbildungssystems abgespeicherte Alt-Bestelldaten und Alt-Netzbenutzungsdaten neben den aktuell durch das Mobilfunknetz übermittelten Netzbenutzungsdaten und Bestelldaten zur Auswahl der dem Bestellvorgang zugehörigen Preisbeeinflussungsdaten genutzt werden. Bei dieser Ausgestaltung des erfindungsgemäßen Verfahrens ist vorteilhaft, dass durch die Verwendung der Alt-Bestelldaten und der Alt-Netzbenutzungsdaten auch vergangene Bestellvorgänge oder vergangene Netzbenutzungen bei der Ermittlung der Gesamtpreisdaten berücksichtigt werden können.

Das erfindungsgemäße Verfahren kann so ablaufen, dass bei Empfang aktueller Bestelldaten oder aktueller Netzbenutzungsdaten die in dem Einflussspeicher gespeicherten Preisbeeinflussungsdaten an diese empfangenen Daten angepasst werden, indem eine Auswahl der gespeicherten Preisbeeinflussungsdaten mit neuen Preisbeeinflussungsdaten überschrieben wird. Dadurch wird es vorteilhafterweise ermöglicht, die Preisbeeinflussungsdaten an aktuelle Bestellvorgänge oder aktuelle Benutzungen des Mobilfunknetzes anzupassen.

Das Verfahren kann bevorzugt so ablaufen, dass die ermittelten Gesamtpreisdaten zu dem Anbieter-Kommunikationsendgerät und/oder zu dem Bestell-Kommunikationsendgerät übertragen werden. Dadurch wird der Anbieter oder der Besteller unmittelbar nach Ermittelung der Gesamtpreisdaten über diese informiert.

Das erfindungsgemäße Verfahren kann weiterhin so ausgestaltet sein, dass das Anbieter-Kommunikationsendgerät und/oder das Bestell-Kommunikationsendgerät zum Übertragen einer die Gesamtpreisdaten betreffenden Bestätigungsnachricht zu dem Preisbildungssystem angeregt wird, ein Eintreffen der Bestätigungsnachricht bei dem Preisbildungssystem als eine die Gesamtpreisdaten betreffende Einverständniserklärung registriert wird, und bei Nicht-Eintreffen der Bestätigungsnachricht bei dem Preisbildungssystem die Gesamtpreisdaten verworfen werden. Damit wird vorteilhafterweise dem Anbieter-Kommunikationsendgerät und/oder dem Bestell-Kommunikationsendgerät ermöglicht, die Gesamtpreisdaten zu überprüfen und mittels eines Interaktionsprozesses die Gesamtpreisdaten zu akzeptieren (d.h. Einverständnis zu erklären) oder abzulehnen.

Das erfindungsgemäße Verfahren kann auch so ausgestaltet sein, dass die ermittelten Gesamtpreisdaten anhand von in den aktuellen Bestelldaten und den aktuellen Netzbenutzungsdaten enthaltenen Informationen aufgeteilt werden in das Mobilfunknetz betreffende Mobilfunk-Preisdaten, den Leistungsanbieter betreffende Anbieter-Preisdaten und das Preisbildungssystem betreffende Preisbildungs-Preisdaten. Dadurch wird vorteilhafterweise eine getrennte Verbuchung verschiedener Preisdatentypen ermöglicht; und es kann beispielsweise eine nachfolgende Abrechnung der Preisdaten sehr einfach und kostengünstig durchgeführt werden.

Bei dem erfindungsgemäßen Verfahren können die Mobilfunk-Preisdaten in einem Mobilfunk-Preisspeicher abgespeichert werden, die Anbieter-Preisdaten in einem Anbieter-Preisspeicher abgespeichert werden und die Preisbildungs-Preisdaten in einem Preisbildungs-Preisspeicher abgespeichert werden.

Die oben genannte Aufgabe wird ebenfalls erfindungsgemäß gelöst durch ein Preisbildungssystem mit einem Einflussspeicher zur Speicherung einer Menge von Preisbeeinflussungsdaten, einer Datenempfangseinrichtung zum Empfang von Bestelldaten, die einen unter Nutzung eines Mobilfunknetzes durchgeführten Bestellvorgang betreffen, und zum Empfang von Netzbenutzungsdaten des Mobilfunknetzes, und eine mit dem Einflussspeicher und der Datenempfangseinrichtung eingangsseitig verbundene Preisbestimmungseinheit zum Ermitteln von die Bestellung betreffenden Gesamtpreisdaten. Bei diesem System werden vorteilhafterweise von der Datenempfangseinrichtung neben den Bestelldaten auch die Netzbenutzungsdaten des Mobilfunknetzes empfangen, so dass sowohl die Bestelldaten als auch die Netzbenutzungsdaten von der Preisbestimmungseinheit zum Ermitteln der Gesamtpreisdaten herangezogen werden können. Weiterhin weist das Preisbildungssystem vorteilhafterweise einen Einflussspeicher auf; die in diesem Einflussspeicher abgelegten Preisbeeinflussungsdaten erlauben es, die Gesamtpreisdaten bestellungsindividuell zu ermitteln.

Das erfindungsgemäße Preisbildungssystem kann einen ausgangsseitig mit der Preisbestimmungseinheit verbundenen Datenspeicher zur Speicherung eintreffender Bestelldaten und Netzbenutzungsdaten aufweisen. Dieser Datenspeicher erlaubt vorteilhafterweise die Speicherung der eintreffenden Daten zum Zwecke einer weiteren, in der Zukunft liegenden Benutzung.

Das erfindungsgemäße Preisbildungssystem kann auch eine mit dem Ausgang der Preisbestimmungseinheit verbundene Verteilereinheit und mehrere eingangsseitig mit der Verteilereinheit verbundene Preisspeicher aufweisen. Diese Verteilereinheit ermöglicht vorteilhafterweise eine Auftrennung des durch die Gesamtpreisdaten beschriebenen Gesamtpreises in Einzelpreise; die zugehörigen Einzelpreisdaten können in den Preisspeichern abgelegt werden. Diese Einzelpreise können den verschiedenen an dem Bestell- bzw. Geschäftsvorgang beteiligten Partnern zugeordnet sein.

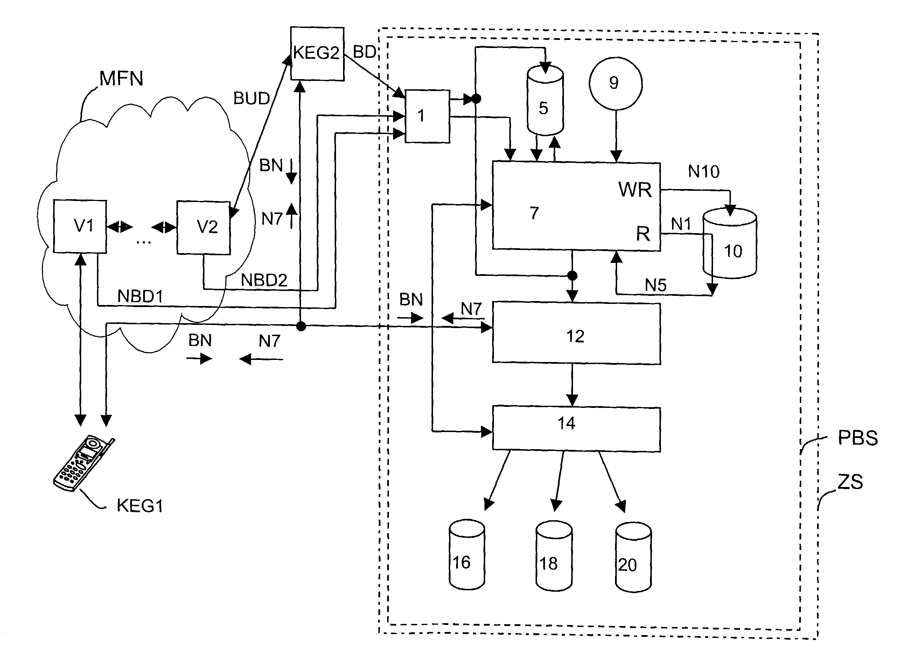

Zur weiteren Erläuterung der Erfindung ist in der einzigen Figur schematisch ein Ausführungsbeispiel eines Preisbildungssystems und ein Ausführungsbeispiel eines unter Benutzung des Preisbildungssystems ablaufenden Verfahrens dargestellt.

In der Figur ist schematisch ein Mobilfunknetz MFN dargestellt, bei dem es sich beispielsweise um ein Mobilfunknetz der zweiten oder dritten Generation handeln kann. Dieses Mobiltelefonnetz kann insbesondere durch ein GSM-Mobilfunknetz (GSM = Global System for Mobile Communications) oder durch ein UMTS-Mobiltelefonnetz (UMTS = Universal Mobile Telecomumnications System) realisiert sein. Von diesem Mobilfunknetz MFN sind beispielhaft lediglich eine erste Vermittlungsstelle V1 und eine zweite Vermittlungsstelle V2 dargestellt. Mit Hilfe eines Bestell-Kommunikationsendgerätes KEG1 (beispielsweise eines Mobiltelefons, eines Laptops oder Palmtops mit Mobilfunkschnittstelle) soll nun bei einem Leistungsanbieter ein Bestellvorgang durchgeführt werden. Ein solcher Bestellvorgang kann beispielsweise dazu dienen, Waren (z. B. Heimelektronikgeräte oder Lebensmittel) oder Dienstleistungen (z. B. Lieferung von Börsenkursen oder Wirtschaftsnachrichten) bei dem Leistungsanbieter zu bestellen. Zur Durchführung solcher Bestellvorgänge verfügt der Leistungsanbieter über ein Anbieter-Kommunikationsendgerät KEG2. Bei diesem Anbieter-Kommunikationsendgerät kann es sich beispielsweise um ein Mobiltelefon oder um einen Rechner mit Mobilfunkschnittstelle handeln. Zur Durchführung des Bestellvorganges wird von dem Bestell-Kommunikationsendgerät KEG1 aus eine Mobilfunkverbindung über die erste Vermittlungsstelle V1 und die zweite Vermittlungsstelle V2 des Mobilfunknetzes MFN zu dem Anbieter-Kommunikationsendgerät KEG2 aufgebaut; über diese Kommunikationsverbindung werden Bestellungsdaten BUD an das Anbieter-Kommunikationsendgerät KEG2 übermittelt. Dabei sind unter Bestellungsdaten solche Daten zu verstehen, welche einer Bestellung von einer Ware oder einer Dienstleistung zugehörig sind und diese Bestellung betreffende Informationen beinhalten. Das Anbieter-Kommunikationsendgerät KEG2 empfängt diese Bestellungsdaten; damit ist auf Seiten des Leistungsanbieters bekannt, dass ein Bestellvorgang und damit eine Bestellung vorliegt.

Die Bestellungsdaten enthalten mindestens ein den Absender der Bestellungsdaten kennzeichnendes Zeichen (beispielsweise dessen Mobilfunkrufnummer MSISDN, die zum Zeitpunkt der Bestellung - z.B. mittels einer sog. SIM-Karte - dem Bestellkommunikationsendgerät KEG1 zugeordnet ist) und einen Bezeichner für die bestellte Ware oder Dienstleistung.

Seitens des Anbieter-Kommunikationsendgerätes KEG2 werden nun zu den Bestellungsdaten BUD gehörende Bestelldaten BD erzeugt. Dazu können die in den Bestellungsdaten BUD enthaltenen Informationen unverändert in die Bestelldaten BD übernommen werden; zusätzlich können auch weitere Informationen über das Bestellkommunikationsendgerät KEG1, den Benutzer des Bestellkommunikationsendgerätes oder über die bestellte Ware oder Dienstleistung hinzugefügt werden (beispielsweise ein Grundpreis der bestellten Ware oder Dienstleistung). All diese Informationen werden als Bestelldaten BD an eine Datenempfangseinrichtung 1 eines Preisbildungssystems PBS gesendet. Das Preisbildungssystem PBS stellt einen Teil eines umfangreicheren Zahlungssystems ZS (Paymentsystem) dar; das Preisbildungssystem PBS kann aber auch eigenständig realisiert sein. Mit Hilfe des Preisbildungssystems PBS sollen nun einen Gesamtpreis der Ware oder Dienstleistung beschreibende Gesamtpreisdaten ermittelt werden. Diese Gesamtpreisdaten beschreiben z.B. den endgültigen Brutto-Preis, welcher dem Nutzer des Bestellkommunikationsendgerätes, also dem Besteller, später in Rechnung gestellt werden kann. In die Berechnung dieser Gesamtpreisdaten geht neben dem z.B. vom Anbieter-Kommunikationsendgerät mit den Bestelldaten übermittelten Grundpreis der Ware oder Dienstleistung auch die Art und Weise der Benutzung des Mobilfunknetzes MFN zur Realisierung des Bestellvorganges und/oder eines Waren- bzw. Datenlieferungsvorganges ein. Ebenso können dabei in der Vergangenheit liegende Bestellvorgänge berücksichtigt werden. Bei derartigen in der Vergangenheit liegenden Bestellvorgängen wird es sich im allgemeinen um Bestellvorgänge handeln, die unter Benutzung desselben den Absender der Bestellungsdaten kennzeichnenden Zeichens (z.B. MSISDN-Nummer) mittels des Bestellkommunikationsendgerätes KEG1 oder auch mittels eines anderen Bestellkommunikationsendgerätes ausgeführt wurden (also mittels genau des Absender-Zeichens, das auch an der aktuellen Bestellung beteiligt ist). Es können jedoch auch andere Bestellvorgänge der Vergangenheit berücksichtigt werden, die unter Angabe anderer Absender-Zeichen durchgeführt wurden. Solche Absender-Zeichen können beispielsweise Mobilfunkrufnummern von Bestellern sein, die einer vorbestimmten Gruppe (z.B. Familie, Unternehmensteil, Konzern) angehören und als solche Gruppenverträge (z.B. Gruppen-Mobilfunkverträge) abgeschlossen haben. Bei dem erfindungsgemäßen Verfahren ist es generell vorteilhaft, wenn die Absender ein sie kennzeichnendes Zeichen verwenden, das einem zwischen ihnen und einem Betreiber des Mobilfunknetzes abgeschlossenen Mobilfunkvertrag zugeordnet ist.

Zum Zwecke der Ermittlung der Gesamtpreisdaten werden von der Datenempfangseinrichtung 1 die empfangenen Bestelldaten zu einem Datenspeicher 5 übertragen und in diesem gespeichert. Die Bestelldaten werden ebenfalls von den Datenempfangseinrichtung 1 an eine Preisbestimmungseinheit 7 übertragen.

In dem Mobilfunknetz MFN werden in der ersten Vermittlungsstelle V1 und in der zweiten Vermittlungsstelle V2 sowie gegebenenfalls an weiteren nicht dargestellten Netzknoten des Mobilfunknetzes Netzbenutzungsdaten NBD1 und NBD2 z. B. messtechnisch ermittelt, wobei diese Netzbenutzungsdaten NBD1 und NBD2 Informationen über die Nutzung des Mobilfunknetzes bei der Durchführung des Bestellvorganges enthalten. Bei derartigen Netzbenutzungsdaten kann es sich beispielsweise um die Angabe der Dauer einer beim Bestellvorgang durchgeführten Kommunikationsverbindung, um den Zeitpunkt der Realisierung der Kommunikationsverbindung beschreibende Daten und/oder um eine Größenangabe für das mittels dieser Kommunikationsverbindung übertragene Datenvolumen handeln. Diese Netzbenutzungsdaten werden unmittelbar nach ihrer Erfassung von dem Mobilfunknetz MFN an die Datenempfangseinrichtung 1 des Preisbildungssystems übertragen und von der Datenempfangseinrichtung 1 empfangen. Danach werden die Netzbenutzungsdaten im Datenspeicher 5 gespeichert sowie zur Preisbestimmungseinheit 7 übertragen.

Die Preisbestimmungseinheit 7 erstellt nun unter Benutzung der empfangenen Bestelldaten und Netzbenutzungsdaten eine Abfragenachricht N1 für einen mit der Preisbestimmungseinheit 7 verbundenen Einflussspeicher 10. In diesem Einflussspeicher 10 sind Daten abgelegt, welche Informationen zur Änderung, Korrektur oder Beeinflussung von Preisdaten enthalten; diese Daten werden kurz als Preisbeeinflussungsdaten bezeichnet. Bei diesen Preisbeeinflussungsdaten kann es sich beispielsweise um Rabatt-Tabellendaten, Bonusdaten oder Angaben zu Preisnachlässen handeln. Diese Preisbeeinflussungsdaten können also die Informationen enthalten, wie der Grundpreis der Ware oder Dienstleistung bei der Berechnung der Gesamtpreisdaten für den jeweiligen Bestellvorgang zu verringern ist. Ebenso können die Preisbeeinflussungsdaten jedoch auch Informationen enthalten betreffend eine Erhöhung des Grundpreises zur Erlangung der Gesamtpreisdaten. Eine solche Erhöhung kann beispielsweise dann vorgesehen sein, wenn beim Bestellvorgang ein besonders großes Datenvolumen über das Mobilfunknetz übertragen wurde oder wenn die Kommunikationsverbindung über das Mobilfunknetz eine vorbestimmte Dauer überschritten hat.

Die Abfragenachricht N1 wird über einen Leseausgang R der Preisbestimmungseinheit 7 an die Einflussspeicher-Datenbank 10 ausgegeben. Mit Hilfe der in der Abfragenachricht N1 enthaltenen Informationen der Netzbenutzungsdaten und Bestelldaten werden nun im Einflussspeicher 10 die für den jeweiligen Bestellvorgang zutreffenden Preisbeeinflussungsdaten adressiert, ausgelesen und mittels der Nachricht N5 an die Preisbestimmungseinheit 7 zurückgesendet. Nun ermittelt die Preisbestimmungseinheit 7 anhand der Bestelldaten und der vom Einflussspeicher 10 empfangenen Preisbeeinflussungsdaten die den Bestellvorgang betreffenden Gesamtpreisdaten. Dies kann im diesem Beispiel so realisiert werden, dass der Grundpreis für die bestellte Ware um eine in den jeweiligen Preisbeeinflussungsdaten enthaltene Prozentangabe reduziert wird. Im Ergebnis dieser Rechnung entstehen die Gesamtpreisdaten, welche am Ausgang der Preisbestimmungseinheit 7 ausgegeben und zu einem Pufferspeicher 12 übertragen werden.

In dem Pufferspeicher 12 werden die Gesamtpreisdaten zunächst zwischengespeichert. Mittels einer Nachricht N7 werden die im Pufferspeicher 12 zwischengespeicherten Gesamtpreisdaten an das Anbieter-Kommunikationsendgerät KEG2 und/oder an das Bestell-Kommunikationsendgerät KEG1 übertragen. Dadurch wird der Anbieter der Ware oder Dienstleistung und/oder der Besteller bzw. die Bestelleinrichtung über den Gesamtpreis informiert. Von dem Pufferspeicher 12 werden die Gesamtpreisdaten zu einer Verteilereinheit 14 geleitet. Diese Verteilereinheit 14 wird von der Preisbestimmungseinheit 7 derart angesteuert, dass sie eine Aufteilung der Gesamtpreisdaten in verschiedene Untergruppen von Preisdaten vornimmt. Die Ansteuerung erfolgt von der Preisbestimmungseinheit 7 aufgrund der vorliegenden Bestelldaten, Netzbelastungsdaten und des in der Preisbestimmungseinheit aufgetretenen Aufwandes für die Bestimmung der Gesamtpreisdaten. In diesem Ausführungsbeispiel wird eine Aufteilung der Gesamtpreisdaten in Mobilfunkpreisdaten, Anbieterpreisdaten und Preisbildungspreisdaten vorgenommen. Die Mobilfunkpreisdaten beschreiben den Anteil der Gesamtpreisdaten, welcher auftritt durch die Benutzung des Mobilfunknetzes MFN; diese Mobilfunkpreisdaten werden in einem Mobilfunk-Preisspeicher 16 abgespeichert. Die Anbieterpreisdaten beschreiben den Anteil an den Gesamtpreisdaten, der dem Anbieter (also dem Betreiber des Anbieter-Kommunikationsendgerätes KEG2) zuzuordnen ist und der die bestellte Ware oder Dienstleistung betrifft. Die Anbieterpreisdaten werden in einem Anbieter-Preisspeicher 18 gespeichert. Die Preisbildungspreisdaten betreffen den Vorgang der Ermittlung der Gesamtpreisdaten, welcher in dem Preisbildungssystem PBS abläuft; diese Ermittlung der Gesamtpreisdaten ist nämlich ebenfalls kostenpflichtig. Die Preisbildungspreisdaten werden daher in einem Preisbildungs-Preisspeicher 20 abgespeichert. Diese Spezialpreisdaten (Mobilfunk-Preisdaten, Anbieter-Preisdaten und Preisbildungs-Preisdaten) können dann unmittelbar einer weiteren Verarbeitung beispielweise im Zahlungssystem ZS zugeführt werden.

Eine Variante des Verfahrens sieht vor, dass zusammen mit der Nachricht N7 eine Information an das Anbieter-Kommunikationsendgerät KEG2 und/oder an das Bestell-Kommunikationsendgerät KEG1 übertragen wird, mittels der das Anbieter-Kommunikationsendgerät KEG2 und/oder das Bestell-Kommunikationsendgerät KEG1 angeregt werden, die Gesamtpreisdaten (z.B. die Höhe dieser Daten) zu prüfen und bei einem positiven Überprüfungsergebnis eine die Gesamtpreisdaten betreffende Bestätigungsnachricht BN zu erzeugen und an das Preisbildungssystem zu übersenden. Wenn eine derartige Bestätigungsnachricht BN bei dem Preisbildungssystem PBS eintrifft (z.B. bei dem Pufferspeicher 12), dann wird diese Bestätigungsnachricht BN als Einverständnis mit den Gesamtpreisdaten gewertet und im Preisbildungssystem PBS abgespeichert. Trifft allerdings eine solche Bestätigungsnachricht BN bei dem Preisbildungssystem PBS nicht ein, so werden die Gesamtpreisdaten als "unbestätigt" markiert oder verworfen und es erfolgt eine Sonderbehandlung der Gesamtpreisdaten oder ein Verfahrensabbruch.

Bisher wurde beispielhaft ein Verfahrensablauf beschrieben, bei dem von der Preisbestimmungseinheit 7 lediglich aufgrund der aktuell empfangenen Bestelldaten BD und Netzbenutzungsdaten NBD1 und NBD2 sowie der aus dem Einflussspeicher 10 ausgelesenen Preisbeeinflussungsdaten die Gesamtpreisdaten ermittelt wurden. In einem anderen Ausführungsbeispiel können zu dieser Ermittlung der Gesamtpreisdaten jedoch auch die in dem Datenspeicher 5 abgelegten Bestelldaten und Netzbenutzungsdaten vergangener Bestellvorgänge genutzt werden. Dazu werden von der Preisbestimmungseinheit 7 aus dem Datenspeicher 5 diejenigen "Alt-Bestelldaten" und "Alt-Netzbenutzungsdaten" abgefragt, welche dort im Zusammenhang mit Bestellvorgängen des Bestellkommunikationsendgerätes KEG1 abgespeichert sind. Aufgrund dieser Alt-Daten verfügt die Preisbestimmungseinheit 7 nun über Informationen über solche Bestellvorgänge, die bereits früher mittels des Bestellkommunikationsendgerätes KEG1 durchgeführt wurden. Auch diese Altdaten werden nun herangezogen bei der Erstellung der Abfragenachricht N1, welche zum Zwecke der Abfrage der nun zu verwendenden Preisbeeinflussungsdaten an den Einflussspeicher 10 gesendet wird. Dadurch ist es möglich, auch vergangene Bestellvorgänge zu berücksichtigen und z. B. in dem Einflussspeicher gespeicherte Preisreduktionsdaten anzuwenden, welche die Bestellhäufigkeit (beispielsweise in Anzahl der Bestellungen im laufenden Jahr), den Bestellumfang (beispielsweise angegeben im monetären Wert der in den letzten 3 Jahren bestellten Waren oder Dienstleistungen) oder die Häufigkeit des Bestellens bestimmter Waren oder Dienstleistungsgruppen (z. B. jeder dritte im Quartal bestellte Videofilm wird ermäßigt geliefert) betreffen.

An die Preisbestimmungseinheit 7 ist ein Zeit- und Datumsgeber 9 angeschlossen. Daher kann in die Abfragenachricht N1 auch das aktuelle Datum und die aktuelle Zeit aufgenommen und aus dem Einflussspeicher 10 beispielsweise Tabellendaten für zeitabhängige Bonussysteme ausgelesen werden.

Bei Eintreffen neuer Bestelldaten und Netzbenutzungsdaten bei der Preisbestimmungseinheit 7 können die in dem Einflussspeicher 10 gespeicherten Preisbeeinflussungsdaten verändert werden. Ein Beispiel für eine derartige Veränderung ist das Einfügen einer neuen Rabattstufe in eine Rabatttabelle bei Erreichen einer bestimmten Anzahl von Bestellungen pro vorgegebener Zeiteinheit. Zu diesem Zweck wird dann über einen Schreibausgang WR der Preisbestimmungseinheit 7 eine Schreibnachricht N10 an den Einflussspeicher 10 gesendet; und mittels dieser Schreibnachricht N10 werden Teile der gespeicherten Preisbeeinflussungsdaten durch neue Preisbeeinflussungsdaten überschrieben. Die neuen Preisbeeinflussungsdaten werden dabei z.B. unter Benutzung der gespeicherten Preisbeeinflussungsdaten, der neuen Bestelldaten und/oder der neuen Netzbenutzungsdaten von der Preisbestimmungseinheit 7 mittels geeigneter Formeln oder Modelle ermittelt. Eine derartige Anpassung der gespeicherten Preisbeeinflussungsdaten an aktuelle Bestellvorgänge kann sich nicht nur auf den gerade ablaufenden Bestellvorgang, sondern auch auf folgende Bestellvorgänge (sogar auf die von anderen Bestellern) auswirken.

Es ist ein besonderer Vorteil des erfindungsgemäßen Verfahrens und der erfindungsgemäßen Anordnung, dass die Gesamtpreisdaten in Echtzeit (also während des Ablaufens des Bestellvorganges) ermittelt werden. Somit können direkt bei der Bestellung die Gesamtpreisdaten ermittelt und - wie oben erläutert - von der Verteilereinheit in speziellere Untergruppen von Preisdaten aufgeteilt werden. Somit brauchen nach Ablauf des Bestellverfahrens lediglich die Gesamtpreisdaten und Spezialpreisdaten (z. B. Mobilfunkpreisdaten, Anbieterpreisdaten und Preisbildungspreisdaten) gespeichert werden. Es ist jedoch nicht notwendig, sämtliche bei der Ermittlung der Gesamtpreisdaten und Spezialpreisdaten berücksichtigte Bestell-, Netzbenutzungs- und Preisbeeinflussungsdaten im Zusammenhang mit dem Bestellvorgang (z.B. für eine spätere, in einem Postprocessing-Schritt stattfindende Ermittlung der Gesamtpreisdaten oder Spezialpreisdaten) abzuspeichern.

Das beschriebene Verfahren ermöglicht eine dynamische und online-durchgeführte Preisbildung und Kostenverteilung beim Durchführen von Bestellvorgängen für Waren und Dienstleistungen. Dabei werden die Benutzung eines Mobilfunknetzes zum Durchführen des Bestellvorganges (d.h. Transportleistungen des Mobilfunknetzes) berücksichtigt und im Mobilfunknetz gewonnene Netzbenutzungs- bzw. Netzbelastungsdaten zur Ermittlung der Gesamtpreisdaten herangezogen. Durch Nutzung von in einem Einflussspeicher gespeicherten Preisbeeinflussungsdaten können aufgrund der Bestelldaten und der Netzbenutzungsdaten verschiedenste Preiskorrektursysteme (Bonussysteme, Rabattsysteme oder Preisnachlasssysteme) angewendet und die durch Nutzung dieser Preisbeeinflussungssysteme erforderlichen Preiskorrekturen in Echtzeit während des Bestellvorganges auf die Grundpreisdaten der Waren oder Dienstleistungen angewendet werden.

## Patentansprüche

1. Verfahren zum Ermitteln von Gesamtpreisdaten bei einem mobilfunkgestützten Bestellvorgang, bei dem
- nach einer unter Benutzung eines Mobilfunknetzes (MFN) durchgeführten Übertragung von Bestellungsdaten (BUD) von einem Bestell-Kommunikationsendgerät (KEG1) zu einem Anbieter- Kommunikationsendgerät (KEG2) eines Leistungsanbieters
ein Preisbildungssystem (PBS) von dem Anbieter-Kommunikationsendgerät (KEG2) mit den Bestellungsdaten (BUD) zugeordneten Bestelldaten (BD) beaufschlagt wird,
- von dem Preisbildungssystem (PBS) unter Nutzung von durch das Mobilfunknetz (MFN) übermittelten und in Zusammenhang mit dem Bestellvorgang aufgetretenen Netzbenutzungsdaten (NBD1, NBD2) aus einer in einem Einflussspeicher (10) abgespeicherten Menge von Preisbeeinflussungsdaten die dem Bestellvorgang zugehörigen Preisbeeinflussungsdaten ausgewählt (N1) werden, und
- anhand der Bestelldaten (BD) und der ausgelesenen (N1, N5) Preisbeeinflussungsdaten die den Bestellvorgang betreffenden Gesamtpreisdaten ermittelt werden.

2. Verfahren nach Anspruch 1,
**dadurch gekennzeichnet, dass**
- die Ermittlung der Gesamtpreisdaten unmittelbar nach Eintreffen der Bestelldaten (BD) bei dem Preisbildungssystem (PBS) durchgeführt wird.

3. Verfahren nach Anspruch 1 oder 2,
**dadurch gekennzeichnet, dass**
- bei dem Preisbildungssystem (PBS) eintreffende Bestelldaten (BD) und Netzbenutzungsdaten (NBD1, NBD2) in einem Datenspeicher (5) des Preisbildungssystems (PBS) abgespeichert werden.

4. Verfahren nach Anspruch 3,
**dadurch gekennzeichnet, dass**
- in dem Datenspeicher (5) des Preisbildungssystems (PBS) abgespeicherte Alt-Bestelldaten und Alt-Netzbenutzungsdaten neben den aktuell durch das Mobilfunknetz übermittelten Netzbenutzungsdaten (NBD1, NBD2) zur Auswahl (N1) der dem Bestellvorgang zugehörigen Preisbeeinflussungsdaten genutzt werden.

5. Verfahren nach einem der vorhergehenden Ansprüche,
**dadurch gekennzeichnet, dass**
- bei Empfang aktueller Bestelldaten (BD) oder aktueller Netzbenutzungsdaten (NBD1, NBD2) die in dem Einflussspeicher (10) gespeicherten Preisbeeinflussungsdaten an diese empfangenen Daten angepaßt werden, indem eine Auswahl der gespeicherten Preisbeeinflussungsdaten mit neuen Preisbeeinflussungsdaten überschrieben (N10) wird.

6. Verfahren nach einem der vorhergehenden Ansprüche,
**dadurch gekennzeichnet, dass**
- die ermittelten Gesamtpreisdaten zu dem Anbieter-Kommunikationsendgerät (KEG2) und/oder zu dem Bestell-Kommunikationsendgerät (KEG1) übertragen werden.

7. Verfahren nach Anspruch 6,
**dadurch gekennzeichnet, dass**
- das Anbieter-Kommunikationsendgerät (KEG2) oder das Bestell-Kommunikationsendgerät (KEG1) zum Übertragen einer die Gesamtpreisdaten betreffenden Bestätigungsnachricht (BN) zu dem Preisbildungssystem (PBS) angeregt wird,
- ein Eintreffen der Bestätigungsnachricht (BN) bei dem Preisbildungssystem (PBS) als eine die Gesamtpreisdaten betreffende Einverständniserklärung registriert wird, und
- bei Nicht-Eintreffen der Bestätigungsnachricht (BN) bei dem Preisbildungssystem (PBS) die Gesamtpreisdaten verworfen werden.

8. Verfahren nach einem der vorhergehenden Ansprüche,
**dadurch gekennzeichnet, dass**
- die ermittelten Gesamtpreisdaten anhand von in den aktuellen Bestelldaten (BD) und den aktuellen Netzbenutzungsdaten (NBD1, NBD2) enthaltenen Informationen aufgeteilt werden (14) in das Mobilfunknetz (MFN) betreffende Mobilfunk-Preisdaten, den Leistungsanbieter betreffende Anbieter-Preisdaten und das Preisbildungssystem (PBS) betreffende Preisbildungs-Preisdaten.

9. Verfahren nach Anspruch 8,
**dadurch gekennzeichnet, dass**
- die Mobilfunk-Preisdaten in einem Mobilfunk-Preisspeicher (16) abgespeichert werden.

10. Verfahren nach Anspruch 8 oder 9,
**dadurch gekennzeichnet, dass**
- die Anbieter-Preisdaten in einem Anbieter-Preisspeicher (18) abgespeichert werden.

11. Verfahren nach einem der Ansprüche 8 bis 10,
**dadurch gekennzeichnet, dass**
- die Preisbildungs-Preisdaten in einem Preisbildungs-Preisspeicher (20) abgespeichert werden.

12. Preisbildungssystem (PBS) mit
- einem Einflussspeicher (10) zur Speicherung einer Menge von Preisbeeinflussungsdaten,
- einer Datenempfangseinrichtung (1) zum Empfang von Bestelldaten (BD), die einen unter Nutzung eines Mobilfunknetzes (MFN) durchgeführten Bestellvorgang betreffen, und zum Empfang von Netzbenutzungsdaten (NBD1, NBD2) des Mobilfunknetzes (MFN), und
- eine mit dem Einflussspeicher (10) und der Datenempfangseinrichtung (1) eingangsseitig verbundene Preisbestimmungseinheit (7) zum Ermitteln von die Bestellung betreffenden Gesamtpreisdaten.

13. Preisbildungssystem nach Anspruch 12,
**gekennzeichnet durch**
- einen ausgangsseitig mit der Preisbestimmungseinheit (7) verbundenen Datenspeicher (5) zur Speicherung eintreffender Bestelldaten (BD) und Netzbenutzungsdaten (NBD1, NBD2).

14. Preisbildungssystem nach Anspruch 12 oder 13,
**gekennzeichnet durch**
- eine mit dem Ausgang der Preisbestimmungseinheit (7) verbundene Verteilereinheit (14) und mehrere eingangsseitig mit der Verteilereinheit (14) verbundene Preisspeicher (16, 18, 20).
